# EUROPEAN PATENT APPLICATION

(11) **EP 4 442 446 A1**
(43) Date of publication of application: **09.10.2024**
(21) Application number: 22901896.5
(22) Date of filing: 05.12.2022
(51) Int. Cl.: B29D 30/00, B29C 65/02, H04W 4/80, G06K 7/10

(54) **TIRE MANUFACTURING METHOD TO WHICH SHORT-RANGE WIRELESS COMMUNICATION TAG TOPPING MODULE IS APPLIED, AND TIRE MANUFACTURED THEREBY**

(30) Priority: 03.12.2021 KR 20210172013
(71) Applicant: HANKOOK TIRE & TECHNOLOGY CO., LTD, Gyeonggi-do 13494 (KR)
(72) Inventor: SO, Soon Hong, Daejeon 34119 (KR)
(74) Representative: Mewburn Ellis LLP
(86) International application number: PCT/KR2022/019601
(87) International publication number: WO 2023/101538

(57) **Abstract**

An embodiment of the present disclosure may include a step (a) of manufacturing a tire body, a step (b) of allowing a short-range wireless communication tag to be topped so as to form a tag topping module, and a step (c) of inserting the tag topping module into a preset position of the tire body.

## Description

### TECHNICAL FIELD

The present disclosure relates to a tire manufacturing method, and more specifically, to a tire manufacturing method that inserts a short-range wireless communication tag topping module into an optimal position within a tire body so as to improve a short-range wireless communication tag recognition rate as well as to prevent damage from an external force, and a tire manufactured thereby.

### BACKGROUND ART

A tire, which is a deformable ring-shaped object made of rubber, is mounted on a wheel of a vehicle such as a car to form a ground-contact portion between the vehicle and a road surface as air is injected, thereby absorbing the shock of an uneven road surface.

Such a tire is a very important part that is essential for a vehicle such as a car, which plays a very important role in safety along with an engine and a safety device, and with no tire thereon, not only ride comfort but also stability cannot be properly secured.

In recent years, an attempt is being made to provide, through inserting a wireless communication tag such as an RFID tag in a process of manufacturing a tire, a function to transmit information such as tire pressure and temperature measured from various sensors including a manufacturer of the tire, a date of manufacture, quality control during manufacturing process, traceability, distribution channel, and the like.

However, in the related art, the wireless communication tag is directly installed during the tire manufacturing process, so there are cases where the wireless communication tag is damaged, and moreover, it is not easy to set an appropriate position of the wireless communication tag, and thus there is a problem in that the communication recognition rate is greatly reduced.

Therefore, a method for solving the foregoing problems is required.

### DISCLOSURE OF INVENTION

### TECHNICAL PROBLEM

The present disclosure is contrived to solve the foregoing problems in the related art, and an aspect of the present disclosure is to provide a tire manufacturing method capable of improving a recognition rate of a short-range wireless communication tag inserted into a tire as well as preventing damage from an external force, and a tire manufactured thereby.

Technical problems to be solved in the present disclosure may not be limited to the above-described problems and other technical problems, which are not mentioned herein, will definitely be understood by those skilled in the art from the following description.

### TECHNICAL SOLUTION

In order to solve the foregoing technical problems, according to an embodiment of the present disclosure, there is provided a tire manufacturing method to which a short-range wireless communication tag topping module is applied, the method including a step (a) of manufacturing a tire body, a step (b) of allowing a short-range wireless communication tag to be topped so as to form a tag topping module, and a step (c) of inserting the tag topping module into a preset position of the tire body.

Here, the step (b) may include forming the tag topping module while wrapping the short-range wireless communication tag so as not to be exposed to the outside through a topping member made of the same material as the tire body.

In addition, the step (b) may include positioning the short-range wireless communication tag between a pair of topping members having a larger area than the short-range wireless communication tag, and heating a contact portion between the pair of topping members to be heat-sealed to each other so as to form the tag topping module.

Furthermore, the step (b) may include applying rubber in an unvulcanized state as the topping member.

Moreover, the step (c) may include allowing the tag topping module to be provided in the tire body such that the tag topping module is formed under an inner liner surface inside the tire body.

Here, the step (c) may include inserting the tag topping module within a reference separation range spaced apart by a preset distance from an upper end of a bead filler provided in the tire body, wherein when a distance from an upper end of the bead filler to a lower end thereof is 37 mm or less, the reference spacing range is set to a region spaced apart by 40 to 55 mm from an upper end of a bead wire provided in the bead filler.

In addition, the step (c) may include inserting the tag topping module within a reference separation range spaced apart by a preset distance from an upper end of a bead filler provided in the tire body, wherein when a distance from an upper end of the bead filler to a lower end thereof is 37 mm or more, the reference spacing range is set to a region spaced apart by 5 to 15 mm from the upper end of the bead filler.

Meanwhile, in order to solve the foregoing technical problems, according to an embodiment of the present disclosure, there is provided a tire including a tire body, and a tag topping module formed in a form in which a short-distance wireless communication tag is topped, and inserted within a reference spacing range spaced apart by a preset distance from an upper end of a bead filler provided in the tire body.

Here, the tag topping module may include a pair of topping members having a larger area than the short-range wireless communication tag, and having contact portions heat-sealed to each other while surrounding the short-range wireless communication tag.

Furthermore, the topping member may have a modulus deviation of 10% or less with respect to the tire body.

### ADVANTAGEOUS EFFECTS

According to an embodiment of the present disclosure, a tag topping module that is provided to surround a short-range wireless communication tag and formed of the same material as a tire body may be applied, thereby having an advantage in that the short-range wireless communication tag can be inserted into an optimal position within a tire body.

In addition, the present disclosure may greatly improve a recognition rate of the short-range wireless communication tag, and prevent damage due to an external force since the short-range wireless communication tag is protected in a state of being topped.

It is to be understood that the effects of the present disclosure are not limited to the foregoing effects, and include all effects that may be deduced from the features described in the detailed description of the invention or the claims.

### BRIEF DESCRIPTION OF THE DRAWINGS

FIG. 1 is a diagram showing each process of a tire manufacturing method to which a short-range wireless communication tag topping module according to the present disclosure is applied;
FIG. 2 is a diagram showing a state in which a short-range wireless communication tag is topped in a tire manufacturing method to which a short-range wireless communication tag topping module according to the present disclosure is applied;
FIGS. 3 and 4 are diagrams showing a state in which a tag topping module is inserted into a tire body in a tire manufacturing method to which a short-range wireless communication tag topping module according to the present disclosure is applied;
FIG. 5 is a diagram showing a contact shear strength trend according to a position of a tire body; and
FIG. 6 is a photograph showing a tag topping module inserted into a tire body according to a tire manufacturing method to which a short-range wireless communication tag topping module according to the present disclosure is applied.

### BEST MODE FOR CARRYING OUT THE INVENTION

Hereinafter, the present disclosure will be described with reference to the accompanying drawings. However, the present disclosure may be implemented in various different forms, and therefore, is not limited to the embodiments described herein. In order to clearly describe the present disclosure, parts not related to the description are omitted, and like reference numerals designate like parts throughout the specification.

Throughout the specification, in case where a portion is "connected to (coupled to, in contact with, in combination with" the other portion, it may include a case of being "indirectly connected to" the other portion by interposing another member therebetween as well as a case of being "directly connected to" the other portion. Furthermore, when a portion may "include" a certain element, unless specified otherwise, it may not be construed to exclude another element but may be construed to further include other elements.

It should be noted that terms used herein are merely used to describe specific embodiments, but not to limit the present disclosure. As used herein, the singular forms are intended to include the plural forms as well, unless the context clearly indicates otherwise. Terms "include" or "have" used herein should be understood that they are intended to indicate the presence of a feature, a number, a step, an element, a component or a combination thereof disclosed in the specification, and it may also be understood that the presence or additional possibility of one or more other features, numbers, steps, elements, components or combinations thereof are not excluded in advance.

Hereinafter, embodiments of the present disclosure will be described in detail with reference to the accompanying drawings.

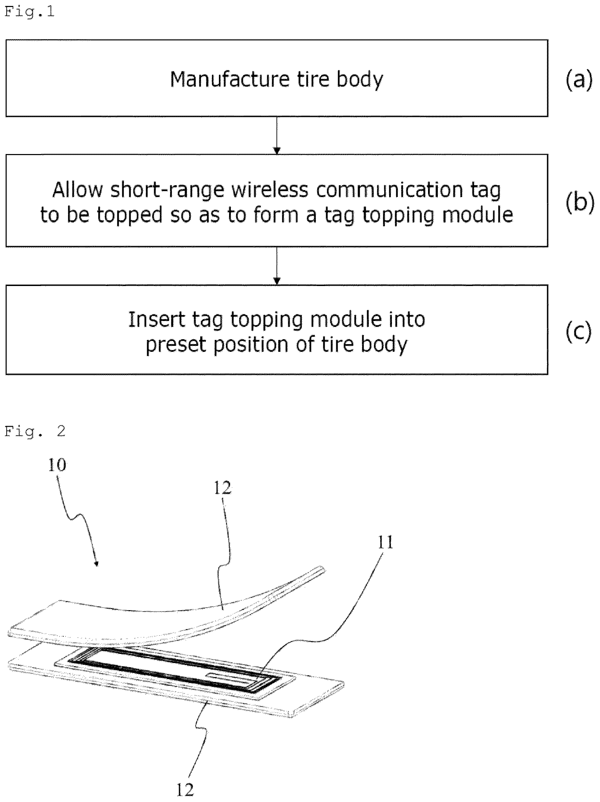

FIG. 1 is a diagram showing each process of a tire manufacturing method to which a short-range wireless communication tag topping module according to the present disclosure is.

As shown in FIG. 1, a tire manufacturing method to which a short-range wireless communication tag topping module according to the present disclosure is applied includes a step (a) of manufacturing a tire body, a step (b) of allowing a short-range wireless communication tag to be topped so as to form a tag topping module, and a step (c) of inserting the tag topping module into a preset position of the tire body.

Hereinafter, each of those processes will be described in detail.

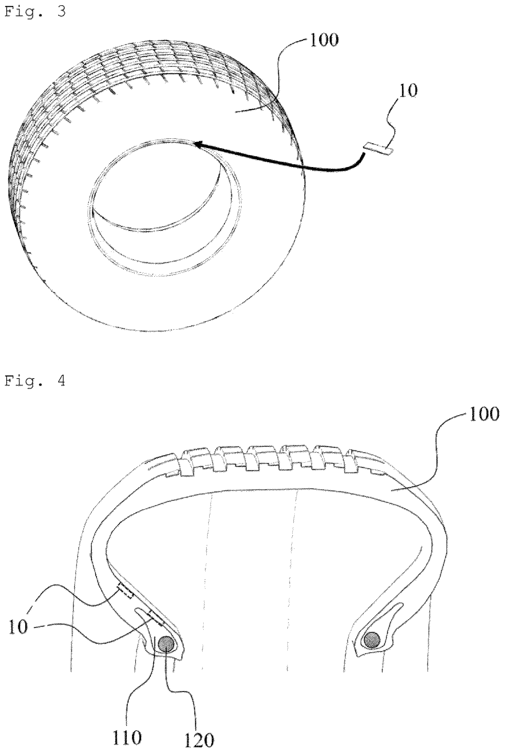

FIG. 2 is a diagram showing a state in which a short-range wireless communication tag 11 is topped in a tire manufacturing method to which a short-range wireless communication tag topping module according to the present disclosure is applied, and FIGS. 3 and 4 are diagrams showing a state in which a tag topping module 10 is inserted into a tire body 100 in a tire manufacturing method to which a short-range wireless communication tag topping module according to the present disclosure is applied.

First, the step (a) of manufacturing the tire body is performed.

In this step, the tire body 100 is manufactured, and this process is obvious to those skilled in the art, and thus a detailed description thereof will be omitted.

Furthermore, in the step (b), a process of allowing a short-range wireless communication tag 11 to be topped so as to form the tag topping module 10 is carried out.

Here, the short-range wireless communication tag 10 may typically be a radio frequency identification (RFID) tag, and various other identification tags for short-range wireless communication may of course be applied thereto.

Furthermore, in the case of this embodiment, as shown in FIG. 2, in the step (b), the tag topping module 10 is formed while wrapping the short-range wireless communication tag 11 so as not to be exposed to the outside through a topping member 12 made of the same material as the tire body 100. For instance, the topping member 12 may be formed of the same material as a rubber material of a sidewall or inner liner of the tire.

More specifically, in this embodiment, the short-range wireless communication tag 11 may be positioned between a pair of topping members 12 having a larger area than the short-range wireless communication tag 11, and a contact portion between the pair of topping members 12 may be heated to be heat-sealed to each other so as to form the tag topping module 10.

Here, the short-range wireless communication tag 11 may preferably be completely covered so as not to protrude outward from the topping member 12, and sealing may be sequentially carried out from one end to the other end so as not to contain air during the heat-sealing process of the pair of topping members 12.

However, the pair of topping members 12 may of course be combined with each other in various ways, such as being adhering to each other using an adhesive resin or the like, in addition to the heat-sealing method.

In addition, in this embodiment, in the step (b), rubber in an unvulcanized state may be applied as the topping member 12, and moreover, the topping member 12 may have the same modulus as the modulus of the rubber constituting the tire body or may have a modulus deviation of 10% or less.

Next, the step (c) of inserting the tag topping module 10 manufactured through the above-described process into a preset position of the tire body 100 is performed.

In this step, the tag topping module 10 may be provided within the tire body 100, and the tag topping module 10 may be formed under an inner liner surface inside the tire body 100.

Moreover, the tag topping module 10 may be inserted within a reference spacing range spaced apart by a preset distance from an upper end of a bead filler 110 provided in the tire body 100. For instance, the tag topping module 10 can be attached to an end portion of the sidewall, but can also be attached onto a tread.

Describing more specifically, when a distance from an upper end of the bead filler 110 to a lower end thereof is 37 mm or less, the reference spacing range may be set to a region spaced apart by 40 to 55 mm from an upper end of a bead wire 120 provided in the bead filler 110.

Additionally, when a distance from an upper end of the bead filler 110 to a lower end thereof is 37 mm or more, the reference spacing range may be set to a region spaced apart by 5 to 15 mm from the upper end of the bead filler 110.

A reference for setting the reference spacing range may be a position at which contact shear strength is the lowest in the tire body 100.

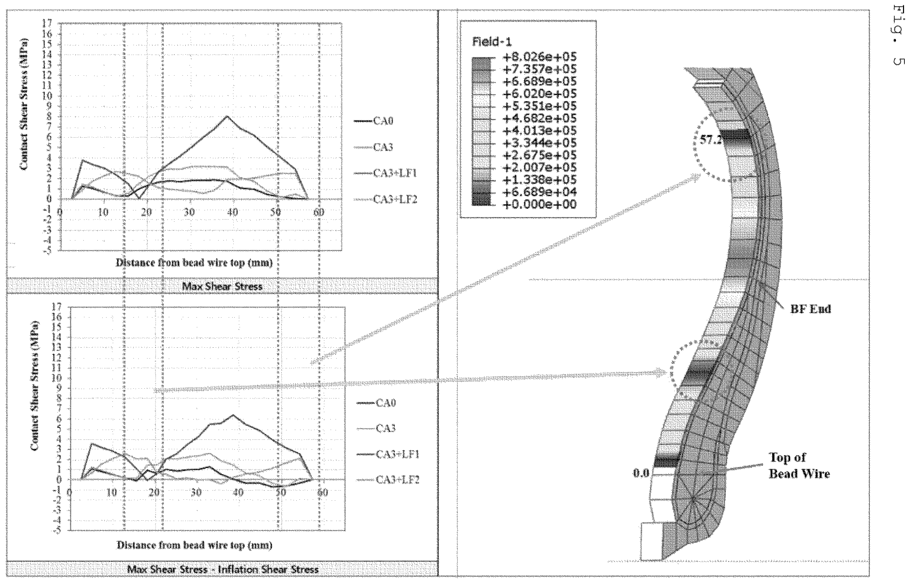

FIG. 5 is a diagram showing a contact shear strength trend according to a position of the tire body 100.

As shown in FIG. 5, the contact shear strength of the tire body 100 is measured to be the highest at the upper end of the bead filler 110.

In addition, a region located between the upper end of the bead wire 120 and the upper end of the bead filler 110, including a region spaced apart by a predetermined distance above the bead filler 110, is measured to have the lowest contact shear strength.

Therefore, the reference separation range may be set according to a total length from an upper end of the bead filler 110 to a lower end thereof, and as described above, when a distance from an upper end of the bead filler 110 to a lower end thereof is 37 mm or less, the reference spacing range may be set to a region spaced apart by 40 to 55 mm from an upper end of the bead wire 120 provided in the bead filler 110, and when a distance from an upper end of the bead filler 110 to a lower end thereof is 37 mm or more, the reference spacing range may be set to a region spaced apart by 5 to 15 mm from the upper end of the bead filler 110.

The reference spacing range may of course be changed depending on a total length from an upper end of the bead filler 110 to a lower end thereof, that is, a specification of the tire body 100.

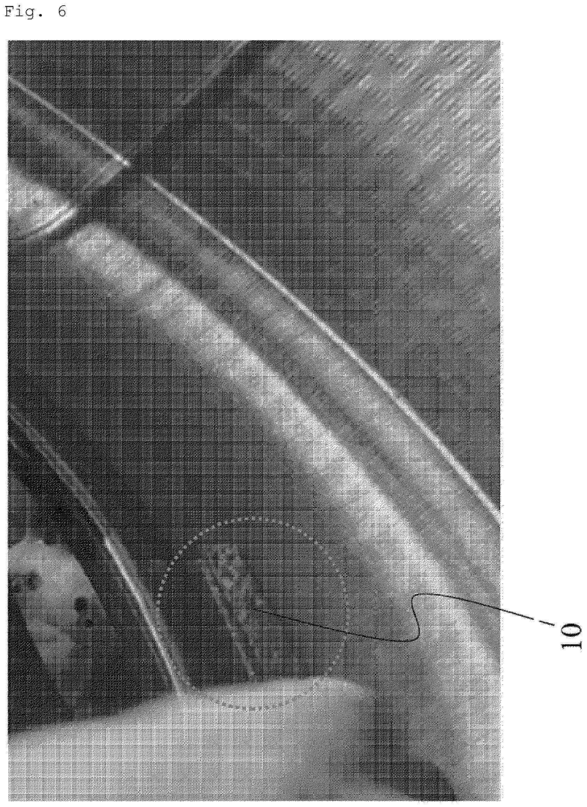

A tire to which a short-range wireless communication tag topping module is applied is manufactured in accordance with the above process, and FIG. 6 is an actual photograph of a tire that is manufactured in accordance with a tire manufacturing method to which a short-range wireless communication tag topping module according to the present disclosure is applied.

As shown in FIG. 6, it can be seen that the tag topping module 10 is inserted into a reference separation range of the tire body 100, and as shown in the photo, the tag topping module 10 may be integrated with the tire body 100 as being vulcanized while being inserted thereinto.

The foregoing description of the present disclosure is for illustrative purposes, but it will be apparent to those skilled in the art to which the invention pertains that the invention can be easily modified in other specific forms without departing from the technical concept and essential characteristics thereof. Therefore, it should be understood that embodiments described above are merely illustrative but not restrictive in all aspects. For example, each element described as a single entity may be distributed and implemented, and likewise, elements described as being distributed may also be implemented in a combined manner.

The scope of the present disclosure is defined by the appended claims, and all changes or modifications derived from the meaning and range of the claims and equivalents thereof should be construed to be embraced by the scope of the present disclosure.

## Claims

1. A tire manufacturing method, the method comprising:
a step (a) of manufacturing a tire body;
a step (b) of allowing a short-range wireless communication tag to be topped so as to form a tag topping module; and
a step (c) of inserting the tag topping module into a preset position of the tire body.

2. The method of claim 1, wherein the step (b) comprises:
forming the tag topping module while wrapping the short-range wireless communication tag so as not to be exposed to the outside through a topping member made of the same material as the tire body.

3. The method of claim 2, wherein the step (b) comprises:
positioning the short-range wireless communication tag between a pair of topping members having a larger area than the short-range wireless communication tag, and heating a contact portion between the pair of topping members to be heat-sealed to each other so as to form the tag topping module.

4. The method of claim 2, wherein the step (b) comprises:
applying rubber in an unvulcanized state as the topping member.

5. The method of claim 1, wherein the step (c) comprises:
allowing the tag topping module to be provided in the tire body such that the tag topping module is formed under an inner liner surface inside the tire body.

6. The method of claim 5, wherein the step (c) comprises:
inserting the tag topping module within a reference separation range spaced apart by a preset distance from an upper end of a bead filler provided in the tire body, and
wherein when a distance from an upper end of the bead filler to a lower end thereof is 37 mm or less, the reference spacing range is set to a region spaced apart by 40 to 55 mm from an upper end of a bead wire provided in the bead filler.

7. The method of claim 5, wherein the step (c) comprises:
inserting the tag topping module within a reference separation range spaced apart by a preset distance from an upper end of a bead filler provided in the tire body, and
wherein when a distance from an upper end of the bead filler to a lower end thereof is 37 mm or more, the reference spacing range is set to a region spaced apart by 5 to 15 mm from the upper end of the bead filler.

8. A tire comprising:
a tire body; and
a tag topping module formed in a form in which a short-distance wireless communication tag is topped, and inserted within a reference spacing range spaced apart by a preset distance from an upper end of a bead filler provided in the tire body.

9. The tire of claim 8, wherein the tag topping module comprises:
a pair of topping members having a larger area than the short-range wireless communication tag, and having contact portions heat-sealed to each other while surrounding the short-range wireless communication tag.

10. The tire of claim 9, wherein the topping member has a modulus deviation of 10% or less with respect to the tire body.
